Europäisches Patentamt

European Patent Office

Office européen des brevets

(19)

(11) Veröffentlichungsnummer: **0 304 582 B1**

# (12) EUROPÄISCHE PATENTSCHRIFT

(45) Veröffentlichungstag der Patentschrift: **23.10.91**

(21) Anmeldenummer: **88110179.4**

(22) Anmeldetag: **25.06.88**

(51) Int. Cl.⁵: **C08J 9/20**, C08J 9/22, C08F 12/08, C08K 3/26

(54) Verfahren zur Herstellung von Styrolpolymerisaten mit enger Korngrössenverteilung.

(30) Priorität: **22.08.87 DE 3728044**

(43) Veröffentlichungstag der Anmeldung:
**01.03.89 Patentblatt 89/09**

(45) Bekanntmachung des Hinweises auf die
Patenterteilung:
**23.10.91 Patentblatt 91/43**

(84) Benannte Vertragsstaaten:
**BE DE FR GB IT NL SE**

(56) Entgegenhaltungen:
**EP-A- 143 880**
**DE-A- 2 510 937**
**US-A- 3 462 380**
**US-A- 3 501 426**

**DERWENT ABSTRACT NR. 74-54 336V (WPI)**
**TELESYSTEMES QUESTEL, Paris**

**DERWENT ABSTRACT NR. 85-028 477 (WPIL)**
**TELESYSTEMES QUESTEL, Paris**

(73) Patentinhaber: **HÜLS AKTIENGESELLSCHAFT**
**Patentabteilung / PB 15 - Postfach 13 20**
**W-4370 Marl 1(DE)**

(72) Erfinder: **Reese, Dirk, Dr.**
**Stargarder Strasse 32**
**W-4370 Marl(DE)**
Erfinder: **Leithäuser, Horst, Dr.**
**Langehegge 151**
**W-4370 Marl(DE)**

## Beschreibung

Styrolpolymerisate können nach dem Verfahren der sogenannten Perlpolymerisation oder Suspensionspolymerisation in wäßriger Dispersion erhalten werden. Insbesondere wird dieses Verfahren angewendet bei der Herstellung von expandierbaren oder verschäumbaren Styrolpolymerisaten. Als Suspensionsstabilisatoren werden üblicherweise wasserlösliche organische Polymere verwendet, die als Schutzkolloide bezeichnet werden. Auch feinteilige Pulver, wie z. B. Calcium- oder Bariumsulfat oder Calciumphosphat, können zur Stabilisierung der Suspensionströpfchen verwendet werden. Derartige Stabilisatorsysteme werden als Pickering-Stabilisatoren bezeichnet. Eine Aufstellung von technisch eingesetzten Schutzkolloiden ist z. B. in dem Artikel von Trommsdorf und Münster in Schildknecht: Polymer Processes Vol. 29, Seiten 119 bis 120, zu finden.

Der Wahl von geeigneten Schutzkolloiden kommt aus folgenden Gründen eine wesentliche Bedeutung zu:

1. Einstellung enger Kornverteilungen mit definierter Größe

Verschäumbare Styrolpolymerisate werden je nach Perlgröße verschiedenen Einsatzzwecken zugeführt: grobe Perlen (2,5 bis 0,8 mm) werden für die Herstellung von Isolierplatten eingesetzt, feinere Fraktionen (0,8 bis 0,4 mm Durchmesser) werden zur Herstellung von Verpakkungsmaterial verwendet. Es ist daher notwendig, daß Perlen im jeweils gewünschten Korngrößenbereich in ausreichender Menge, d. h. in hoher Ausbeute, anfallen.

Dabei soll der Anfall an Über- oder Unterkorn möglichst gering sein. Der bekanntgewordene Stand der Technik erlaubt zwar eine gewisse Steuerung der Korngröße selbst, jedoch ist die Verteilungskurve immer noch relativ breit, d. h., der Anteil an sogenanntem Über- und/ oder Unterkorn ist noch zu groß.

2. Niedriger Innenwassergehalt der Perlen

Bei der üblichen Suspensionspolymerisation wird bekanntlich stets eine gewisse Menge Wasser in die Perlen eingeschlossen. Polymerisate mit einem niedrigen Gehalt an eingeschlossenem Wasser weisen im aufgeschäumten Zustand eine gleichmäßige Schaumstruktur auf, die die Wärmeisolierfähigkeit der Schaumstoffplatten positiv beeinflußt. Ein möglichst niedriger Gehalt an eingeschlossenem Wasser, sogenanntem Innenwasser, ist daher anzustreben.

3. Kugelförmige Gestalt der Perlen

Bei der Suspensionspolymerisation von treibmittelfreiem Styrol werden, wegen der besseren Verarbeitbarkeit, deformierte Perlen angestrebt. Bei der Herstellung expandierbarer Stryrolpolymerisate sollten die Perlen jedoch möglichst kugelförmige Gestalt besitzen.

4. Ausreichende Stabilität der Suspension über den gesamten Polymerisationszyklus

Die Suspension zur Herstellung von expandierbaren Styrolpolymerisaten ist noch labiler als die von treibmittelfreien Styrolpolymerisaten. Bei den heute üblichen Reaktorgrößen bis zu 100 m³ stellt der Verlust eines Ansatzes daher einen erheblichen Schaden dar. Es muß also gewährleistet sein, daß bei Störfällen die Phasentrennung so langsam vor sich geht, daß genügend Zeit bleibt, einen Polymerisationsinhibitor zuzusetzen.

Alle diese Forderungen werden von keinem bis heute bekannten Suspensionssystem gleichzeitig erfüllt. Es hat zwar nicht an Versuchen gefehlt, einen gangbaren Weg zu finden, um alle vier Anforderungen gleichzeitig zu erfüllen. Wie der bekanntgewordene Stand der Technik zeigt, hatten die Bemühungen jedoch keinen Erfolg.

In der DE-A-25 48 524 wird ein Verfahren beschrieben, wonach Suspensionsstabilisatoren eingesetzt werden, die durch radikalische Polymerisation von Styrol in Gegenwart von Polyvinylpyrrolidon hergestellt wurden.

Die DE-B2-25 10 937 beschreibt eine Methode, bei der das System anfangs im Zustand geringer Viskosität mit Tricalciumphosphat schwach stabilisiert wird, einige Stunden später erfolgt ein Nachstabilisieren mit einer wäßrigen Lösung von Polyvinylpyrrolidon.

Nach beiden Verfahren sollen Styrolpolymerisate mit geringem Innenwassergehalt erzeugt werden können. Diese Verfahren haben jedoch den Nachteil, daß die Korngröße des Polymerisates durch den Zugabezeitpunkt des organischen Schutzkolloides bestimmt wird.

Die genaue Bestimmung des Polymerisationsumsatzes bei heterogenen Gemengen, wie sie bei der Suspensionspolymerisation vorliegen, ist schwierig. Eine genaue Kenntnis des Umsatzes ist für die reproduzierbare Einstellung der Kornspektren jedoch notwendig, da die Perlgröße von der jeweiligen Viskosität der polymerisierenden Phase abhängt, bei der das Schutzkolloid zugegeben wird.

Außerdem ist das polymerisierende System etwa 2 Stunden in einem unsicheren Betriebszustand, was speziell beim Einsatz von Großreaktoren besonders nachteilig ist. Ein Störfall, z. B. ein Rührerausfall, kann besonders zu Anfang der Polymerisation, wenn die Hauptmenge an Styrol noch vorhanden ist, zu einer

EP 0 304 582 B1

Zerstörung des Reaktors führen.

In der DE-B-20 49 291 wird vorgeschlagen, zwei Schutzkolloide, nämlich Polyvinylalkohol mit unterschiedlichem Hydroxilierungsgrad, einzusetzen, um einheitlich große runde Perlen zu erhalten. Wie die angegebenen Beispiele zeigen, muß dabei das Verhältnis von Styrol zu Wasser so ungünstig gewählt werden, daß das Verfahren unwirtschaftlich ist. Das Verfahren kann nicht dazu beitragen, die Korngröße der Perlen gezielt zu steuern.

Wie bereits eingangs erwähnt wurde, werden auch wasserunlösliche anorganische Pulver als Suspensionstabilisatoren eingesetzt. Die Verwendung von Calciumphosphaten ist am gebräuchlichsten. Diese anorganischen Verbindungen werden in der Regel in Kombination mit kleineren Mengen an Emulgatoren oder Tensiden eingesetzt (Houben-Weyl, Methoden der organischen Chemie, 4. Auflage, Band XIV, Teil 1, Makromolekulare Stoffe, Seite 425). Die Anwendung dieser Systeme ist im Vergleich zu organischen Schutzkolloiden aber eingeschränkt, da eine reproduzierbare Handhabung und ein störungsfreier Verlauf der Suspensionpolymerisation nur in einem engen Bereich möglich ist. Auf Seite 422, letzter Absatz, Zeilen 6 bis 8, dieser Literaturstelle wird hierzu ausgeführt:

"Es lassen sich kaum Bedingungen angeben, unter denen ein pulverförmiges Dispergiermittel einer breiteren Anwendung fähig wäre. Bei der Kombination von anorganischen Verbindungen mit Tensiden muß die optimale Dosierung exakt eingehalten werden, da sowohl Unterdosierung als auch Überdosierung des Tensides eine Koagulation des Ansatzes zur Folge haben."

Aus der französischen Patentschrift 20 79 991 ist auch bekannt, sowohl durch die Menge des Suspensionsmittels (Schutzkolloids) oder durch Variieren des Phasenverhältnisses wäßriger zu organischer Phase oder auch durch Verwenden einer Mischung aus organischem Schutzkolloid und anorganischem Suspensionsstabilisator die Form der Perlen zu verändern. Nach dieser Arbeitsweise erhält man notwendigerweise keine kugelförmigen Perlen, auch keine Perlen mit niedrigem Innenwassergehalt, weil das Suspensionsmittel nicht vor der Polymerisation der wäßrigen Phase zugesetzt wird. Beim Zugeben des Suspensionsmittels zu Beginn der Polymerisation läßt sich die Korngröße nicht reproduzierbar einstellen.

Auch das ähnliche Verfahren der US-A-3 222 343 erfüllt nicht die geforderten Bedingungen.

Aus der US-A-3 222 340 ist ein Verfahren der Suspensionspolymerisation bekannt, welches in Gegenwart von Calciumphosphat als Suspensionsstabilisator arbeitet.

Zur Verbesserung der Wirksamkeit des Phosphats werden relativ größere Mengen eines Komplexbildners zugesetzt. Eine Lehre zur Verengung der Korngrößenverteilung von verschäumbarem Polystyrol bei der Suspensionspolymerisation in Gegenwart von organischen Schutzkolloiden kann daraus nicht nahegelegt werden.

In der EP-A-0 143 880 wird ein Styrol-Suspensionspolymerisationsverfahren beschrieben, welches neben den üblichen Komponenten aus einem organischen Schutzkolloid, einem anorganischen Suspensionsstabilisator (Pickering-Dispergator) sowie wasserlöslichen anorganischen Salzen besteht.

Der Erfindung liegt die Aufgabe zugrunde, ein Verfahren zur Suspensionspolymerisationvon Styrol zu entwickeln, bei dem die Suspension über den gesamten Polymerisationszyklus stabil ist, und das, gegebenenfalls expandierbare, Perlen mit niedrigem Innenwassergehalt, kugelförmiger Gestalt und enger Korngrößenverteilung liefert.

Diese Aufgabe wird erfindungsgemäß gelöst durch Polymerisation von Styrol, gegebenenfalls im Gemisch mit Comonomeren, in wäßriger Dispersion in Gegenwart monomerlöslicher Initiatoren, organischer Schutzkolloide und anorganischer Suspensionsstabilisatoren, wobei man dem Polymerisationsgemisch 50 bis 500 ppm, vorzugsweise 100 bis 300, insbesondere 100 bis 290 ppm, bezogen auf die wäßrige Phase, an schwer- oder unlöslichem Carbonat oder Bicarbonat zusetzt.

Der Zusatz des Carbonats oder Bicarbonats erfolgt bei einem Monomerumsatz von 0 bis 40, insbesondere von 0 bis 25 Gewichtsprozent.

Zweckmäßigerweise erfolgt dieser Zusatz in Form von Carbonaten oder Bicarbonaten von Metallen der I. Oder II. Hauptgruppe, sowie der I. bis VIII. Nebengruppe des Periodensystems der Elemente. Es kommen beispielsweise infrage $MgCO_3$, $CaCO_3$, $BaCO_3$, $ZnCO_3$, $CuCO_3$ oder die entsprechenden Bicarbonate. Die Carbonate und Bicarbonate sind dabei wasserunlöslich bzw. in Wasser schwerlöslich.

Besonders vorteilhaft sind die Carbonate des Calciums, Magnesiums, Zink und Kupfers.

Die Arbeitsweise kann sowohl zur Herstellung treibmittelfreier Styrolpolymerisate als auch zur Herstellung treibmittelhaltiger, sogenannter expandierbarer oder verschäumbarer Styrolpolymerisate verwendet werden. Insbesondere ist sie bei der Herstellung expandierbarer Styrolpolymerisate geeignet, da dieses System wesentlich labiler ist.

Besonders geeignet ist die Arbeitsweise bei der Suspensionspolymerisation in großen Kesseln, d. h. solchen größer als 10 m$^3$, insbesondere bis 200 m$^3$.

Das erfindungsgemäße Verfahren löst die Aufgabe der Herstellung von Styrolpolymerisaten mit enger

3

Korngrößenverteilung. Will man außerdem die Korngröße der Styrolpolymerisate steuern, so greift man zweckmäßigerweise auf die bekannten Methoden des Standes der Technik zurück, wie beispielsweise Steuerung der Korngrößen durch Variation des Molgewichts der eingesetzten Schutzkolloide, wie sie in der EP-A-0 137 916 beschrieben wird. Danach erhält man kleinere Korngrößen bei Einsatz höhermolekularer Schutzkolloide und setzt entsprechend bei angestrebtem gröberem Kornspektrum niedermolekulare Schutzkolloide ein. Es ist auch möglich, die Korngröße der Styrolpolymerisate durch Variation der Konzentration des Schutzkolloids zu steuern. Will man gröbere Teilchen erhalten, so vermindert man die Menge des Schutzkolloids. Will man dagegen das Kornspektrum zu geringeren Größen hinverschie ben, so erhöht man die Konzentration des Schutzkolloids. Diese Steuerung der Korngröße ist Stand der Technik.

Nach einem bevorzugten Verfahren werden der wäßrigen Phase, welche das Schutzkolloid und den wasserunlöslichen Suspensionsstabilisator enthält, geringe Mengen eines Komplexbildners zugesetzt, der zunächst alle eingebrachten, gegebenenfalls störenden, Fremdionen entfernt, und dann werden die Carbonate und Bicarbonate zugesetzt.

Geeignete Komplexbildner sind zum Beispiel Aminopolycarbonsäuren, wie Ethylendiamintetraessigsäure oder Nitrilotriessigsäure.

Die Menge des Komplexbildners richtet sich nach der Menge der eingebrachten, wasserlöslichen Fremdionen und kann bis zu 0,5 Gewichtsprozent, bezogen auf die wäßrige Phase, betragen, ohne die Polymerisation zu stören; im allgemeinen genügen 0,0001 bis 0,05, vorzugsweise 0,0005 bis 0,02 Gewichtsprozent.

Ferner kann bei der Polymerisation sogenanntes Fehlkorn zugesetzt werden, d. h. Über- oder Untergrößen vorhergehender Chargen, die gegebenenfalls auch Treibmittel, Beschichtungsmittel oder Flammschutzmittel enthalten können. Bei einem solchen Zusatz ist insbesondere die Verwendung der genannten Komplexbildner vorteilhaft. Dieses sogenannte Fehlkorn wird mit der organischen Phase zugesetzt.

Bei dem Verfahren der Erfindung werden bevorzugt Hydroxiethylcellulose oder Polyvinylpyrrolidon, also wasserlösliche Schutzkolloide eingesetzt. Auch andere Schutzkolloide sind einsetzbar, doch sollte durch den Zusatz des Schutzkolloids die Grenzflächenspannung zwischen Styrol und wäßriger Phase nicht unter 18 N/mm$^2$ absinken. Die Grenzflächenspannung Styrol/Wasser liegt bei 32 N/mm$^2$. Der Einsatz von Schutzkolloiden, deren Zusatz die Grenzflächenspannung zwischen Styrol und Wasser nicht unter 18 N/mm$^2$ senkt, hat den Vorteil, daß diese bereits vor Beginn der Polymerisation zugegeben werden können. Damit ist eine ausreichende Stabilisierung des Polymerisationsansatzes ständig gewährleistet. Es entstehen in jedem Falle kugelrunde Perlen.

Die Schutzkolloide werden in Konzentrationen zwischen 0,01 und 0,3 Gewichtsprozent, bezogen auf die Menge an Wasser, insbesondere in Konzentrationen zwischen 0,05 und 0,15 Gewichtsprozent eingesetzt. Diese Substanzen sollen im angegebenen Konzentrationsbereich bei den beim Polymerisationsprozeß herrschenden Temperaturen zwischen 25 und 125 °C in Wasser klar und vollständig löslich sein. Die Molgewichte der Schutzkolloide sollten $M_w$ = 50 000 bis 1 000 000, vorzugsweise 100 000 bis 700 000, gemessen nach HPLC (= High Pressure Liquid Chromatography) betragen.

Außerdem enthält das System zusätzlich zu dem organischen Schutzkolloid als Suspensionsstabilisator ein in Wasser unlösliches, anorganisches Pulver. Geeignete Pulver sind z. B. feinteilige Tricalciumphosphate, Bariumphosphat, Calcium- oder Bariumsulfat. Das Gewichtsverhältnis von organischem Schutzkolloid und anorganischem Suspenionsstabilisator liegt im Bereich von 1 : 1 bis 1 : 5, insbesondere von 1 : 2 bis 1 : 4.

Die organischen Schutzkolloide werden zweckmäßigerweise zusammen mit den übrigen Komponenten des Stabilisierungssystems vor Beginn der Polymerisation in die wäßrige Phase gegeben. Unter Rühren wird die organische Phase zugesetzt und anschließend aufgeheizt. Das System ist daher zu jedem Zeitpunkt der Polymerisation ausreichend stabil. Sollte der Rührer ausfallen, tritt die Trennung der wäßrigen und organischen Phase so langsam ein, daß genügend Zeit bleibt, einen Polymerisationsinhibitor zuzusetzen. Es entstehen Styrolpolymerisate, deren Innenwassergehalt außerordentlich niedrig ist. Er liegt zwischen 0,3 und 1,0 Gewichtsprozent (vgl. Tabelle 1).

Bei dem Verfahren der Erfindung sollte das Gewichtsverhältnis von organischer zu wäßriger Phase im Bereich von 0,9 : 1 bis 1,25 : 1 liegen, bevorzugt im Bereich um 1 : 1.

In der organischen Phase sind die Monomeren und gegebenenfalls Fehlkorn enthalten. Geeignete Monomere sind Styrol und Monomergemische, die mindestens 50 Gewichtsprozent Styrol enthalten und zusätzlich mit Styrol copolymerisierbare Styrol-Derivate, z. B. alpha-Methylstyrol, Divinylbenzol, Isopropenylbenzol, p-Methylstyrol oder kernhalogenierte styrole.

Ferner enthält die organische Phase die monomerlöslichen Katalysatoren; üblicherweise sind dies eine oder mehrere radikalbildende Substanzen, z. B. t-Butylperbenzoat, t-Butylperisononanat, Di-t-butylperoxid, Dibenzoylperoxid oder Mischungen derselben. Sie werden in üblichen Mengen von 0,2 bis 1, insbesondere von 0,3 bis 0,6 Gewichtsprozent, bezogen auf die organische Phase, verwerdet.

Ferner geeignet sind z. B. auch sogenannte Azokatalysatoren, wie Azoisobutyronitril.

Die Polymerisation wird nach dem an sich bekannten Verfahren bei Temperaturen von 80 bis 130 °C durchgeführt. Dabei kann zunächst bei einer Temperatur von 80 bis 90 °C begonnen und im Verlauf der Polymerisation auf 90 bis 120 °C gesteigert werden.

Die Styrolpolymerisate können außerdem organische Halogenverbindungen als Flammschutzmittel enthalten, wie die bromierten Oligomeren des Butadien oder des Isopren. Als typische Vertreter seien genannt: 1,2,5,6-Tetrabromcyclodecan, 1,2,5,6,9,10-Hexabromcyclododecan, bromiertes Polybutadien mit einem Polymerisationsgrad von z. B. bis 15, 1-(alpha-beta-Dibromethyl)-3,4-dibromcyclohexan. Es kann vorteilhaft sein, synergistisch wirkende Substanzen, wie Di-t-butylperoxid, Dicumylperoxid, Poly-p-diisopropylbenzol etc. zuzusetzen.

Bei der Herstellung expandierbarer Styrolpolymerisate werden flüssige oder gasförmige organische Verbindungen verwendet, die das Styrolpolymerisat nicht lösen und deren Siedepunkt unterhalb des Erweichungspunktes des Polymerisates liegt, z. B. aliphatische Kohlenwasserstoffe, wie Propan, Butan, Pentan, Hexan, Cyclohexan, oder Halogenkohlenwasserstoffe, wie Methylchlorid, Dichloriddifluormethan, Trichlormonofluormethan oder 1,2,2-Trifluor-, 1,1,2-Trichlorethan. Auch Mischungen der Treibmittel können verwendet werden. Die Treibmittel werden üblicherweise in Mengen von 2 bis 20 Gewichtsprozent, vorzugsweise 3 bis 12 Gewichtsprozent, bezogen auf die Monomeren, verwendet.

Die expandierbaren Styrolpolymerisate können außerdem Zusatzstoffe, wie Farbstoffe, Füllstoffe, und Regulierungsmittel für die Schaumporosität, wie Epoxialkane, enthalten. Die expandierbaren Styrolpolymerisate liegen nach der Herstellung in Kugelform vor und haben im allgemeiner einen Teilchendurchmesser von 0,3 bis 3 mm, vorzugsweise 0,4 bis 2,5 mm. Sie können nach den üblichen Verfahren in vorgeschäumtem Zustand durch Erhitzen in Formen, welche nicht gasdicht schließen, weiter aufgeschäumt und zu Schaumstoffkörpern versintert werden, die in ihren Ausmaßen dem Innenhohlraum der verwendeten Form entsprechen.

Außerdem können die nach der Polymerisation anfallenden Perlen in üblicher Weise beschichtet werden, z. B. mit Estern der Stearinsäure und/ oder Metallseifen, wie Zinkstearat.

## 1. Beispiele

### 1.1 Polymerisation (in Gegenwart von Treibmitteln)

In einem geeigneten Pulvermischer werden für je 100 Gewichtsteile Wasser die in Tabelle 1 angegebenen Mengen an organischem Schutzkolloid, feinteiligem Tricalciumphosphat sowie $10^{-2}$ Gewichtsteile Ethylendiamintetraessigsäure abgemischt. Dieses Pulvergemisch wird dann in einen Rührbehälter gegeben, in dem 100 Gewichtsteile vollentsalztes Wasser vorgelegt werden. Einige Zeit (ca. 5 Minuten) vor Zugabe der organischen Phase wird die entsprechende Menge an schwer- oder unlöslichen Carbonaten oder Bicarbonaten, wie in Tabelle 1 vermerkt, in die wäßrige Phase zugegeben.

Danach werden unter Rühren 100 Teile Styrol zugegeben, in dem 0,30 Teile Dibenzoylperoxid und 0,15 Teile 6-Butylperbenzoat gelöst sind. Diese Mischung wird 4 Stunden bei 90 °C und 6 Stunden bei 115 °C unter Rühren polymerisiert.

Drei Stunden nach Erreichen von 90 °C werden 7 Teile eines Gemisches aus normal- und iso-Pentan zugegeben. Nach Beendigung der Polymerisation wird der Rührbehälter entleert und die Polymerisatteilchen vom Außenwasser befreit.

Das Innenwasser wird folgendermaßen bestimmt:

Eine Probe des expandierbaren Polystyrols wurde zur Beseitigung von Außenwasserspuren 2 Minuten mit Methanol behandelt, dann auf einer Nutsche abgesaugt und 5 Minuten mit Luft von 20 °C im Gegenstrom beblasen. Die so aufbereitete Probe wurde dann nach der Methode von "Karl-Fischer" titriert.

### 1.2 Polymerisation (in Abwesenheit von Treibmitteln)

In einem Rührreaktor werden zu 100 Teilen vollentsalztem Wasser 0,16 Teile Hydroxiethylcellulose ($M_w$ ~ 150 000, nach HPLC), 0,40 Teile Tricalciumphosphat und 0,01 Teile Ethylendiamintetraessigsäure sowie die in Tabelle 1 vermerkte Menge Puffersubstanz $CaCO_3$ zugegeben. Danach werden unter Rühren 100 Teile Styrol zugegeben, in dem 0,27 Teile Dibenzoylperoxid und 0,1 Teile 6-Butylperbenzoat gelöst sind. Diese Mischung wird 7 Stunden unter Rühren bei 90 °C polymerisiert.

Das erhaltene perlförmige Polymerprodukt wird mittels einer Nutsche von der Wasserphase getrennt, getrocknet und gesiebt.

Die Ergebnisse sind in Tabelle 2 enthalten.

## Tabelle 1

| Versuch Nr. | HEC[1] (%) | TCP[2] (%) | Carbonat-zusatz Art | Konz. | d'[3] (mm) | ∢[4] | H20 (%) | Perl-form[5] |
|---|---|---|---|---|---|---|---|---|
| 1 zum Vergleich | 0,05 | 0,125 | – | – | 1,4 | 78 | 1,1 | R/F |
| 1 erfindungsgem. | 0,05 | 0,125 | $CaCO_3$ | 100 | 1,4 | 84 | 1,0 | R |
| 2 erfindungsgem. | 0,05 | 0,125 | $CaCO_3$ | 300 | 1,7 | 84 | 0,9 | R |
| 2 zum Vergleich | 0,05 | 0,25 | – | – | 0,9 | 79 | 1,2 | R |
| 3 zum Vergleich | 0,10 | 0,25 | – | – | 0,9 | 77 | 1,1 | R |
| 4 erfindungsgem. | 0,05 | 0,25 | $CaCO_3$ | 200 | 1,4 | 84 | 0,9 | R |
| 5 erfin- | 0,10 | 0,25 | $CaCO_3$ | 300 | 1,2 | 85 | 0,9 | R |

[1] HEC = Hydroxiethylcellulose (Mw ~ 150 000 nach HPLC)

[2] TCP = Tricalciumphosphat

[3] Mittlere Korngröße bei 36,8 % Siebrückstand

[4] Winkel der Verteilungsgeraden im RRSB-Netz

[5] R = Rund, F = Flach

Tabelle 2

| Versuch Nr. | Carbonat- zusatz | | $d'$ [3] (mm) | $\}$ [4] |
|---|---|---|---|---|
| | Art | Konz. | | |
| 1 zum Ver- gleich | - | - | 0,6 | 70 |
| 1 erfin- dungsgem. | $CaCO_3$ | 100 | 0,7 | 78 |
| 2 erfin- dungsgem. | $CaCO_3$ | 200 | 0,9 | 79 |
| 3 erfin- dungsgem. | $CaCO_3$ | 300 | 1,2 | 80 |
| 4 erfind- dungsgem. | $BaCO_3$ | 300 | 1,0 | 80 |
| 5 erfin- dungsgem. | $MgCO_3$ | 300 | 1,4 | 75 |
| 6 erfin- dungsgem. | $MnCO_3$ | 300 | 1,5 | 73 |
| 7 erfin- dungsgem. | $CuCO_3$ | 300 | 1,9 | 78 |

Das erfindungsgemäße Verfahren führt zu Teilchen mit erheblich verengtem Kornspektrum, wie aus der Steigung der Verteilungsgeraden im RRSB-Netz in beiden Tabellen deutlich zu ersehen ist. Da die Polymerisation 1.2 im Labormaßstab durchgeführt wurde, liegen die Werte für die Steigung der Verteilungsgeraden in Tabelle 2 insgesamt, also auch beim Vergleichsversuch, niedriger, jedoch ist die Relation zwischen Vergleichsversuch und erfindungsgemäßen Versuchen in beiden Tabellen praktisch gleich.

Durch die erfindungsgemäße Maßnahme läßt sich mithin, verglichen mit dem Stand der Technik, das Kornspektrum signifikant verengen.

**Patentansprüche**

1. Verfahren zur Herstellung von Styrolpolymerisaten mit enger Korngrößenverteilung durch Polymerisation von Styrol, gegebenenfalls im Gemisch mit Comonomeren in wäßriger Dispersion in Gegenwart monomerlöslicher Initiatoren, organischer Schutzkolloide und anorganischer Suspensionsstabilisatoren, dadurch gekennzeichnet,

    daß man dem Polymerisationsgemisch 50 bis 500 ppm, bezogen auf die wäßrige Phase, an in Wasser schwer- oder unlöslichem Carbonat oder Bicarbonat zusetzt.

2. Verfahren nach Anspruch 1,

EP 0 304 582 B1

dadurch gekennzeichnet,
daß man dem Polymerisationsgemisch 100 bis 300 ppm, bezogen auf die wäßrige Phase, an Carbonat oder Bicarbonat zusetzt.

3. Verfahren nach den Ansprüchen 1 und 2,
dadurch gekennzeichnet,
daß man in Gegenwart von an sich bekannten gasförmigen oder flüssigen organischen Verbindungen als Treibmittel arbeitet.

4. Verfahren nach den Ansprüchen 1 bis 3,
dadurch gekennzeichnet,
daß man in Gegenwart von Fehlkorn polymerisiert.

5. Verfahren nach den Ansprüchen 1 bis 4,
dadurch gekennzeichnet,
daß man in der organischen und/oder der wäßrigen Phase zunächst mit Hilfe von Komplexbildnern die störenden Fremdionen entfernt und dann die Carbonate oder Bicarbonate zusetzt.

6. Verfahren nach den Ansprüchen 1 bis 5,
dadurch gekennzeichnet,
daß man in Gegenwart von an sich bekannten flammhemmenden Verbindungen polymerisiert.

7. Verfahren nach den Ansprüchen 1 bis 6,
dadurch gekennzeichnet,
daß man die erhaltenen Polymerisate nach der Polymerisation mit an sich bekannten Beschichtungsmitteln beschichtet.

8. Verwendung der nach den Ansprüchen 1 bis 7 erhaltenen Polymerisate zur Herstellung von expandierbaren oder nicht expandierbaren Styrolpolymerisaten.

## Claims

1. A process for the preparation of a styrene polymer having a narrow particle size distribution by polymerising styrene, if desired mixed with comonomers, in agueous dispersion in the presence of a monomersoluble initiator, an organic protective colloid and an inorganic suspension stabiliser, characterised in that from 50 to 500 ppm, based on the agueous phase, of a carbonate or bicarbonate which is sparingly soluble or insoluble in water are added to the polymerisation mixture.

2. A process according to claim 1, characterised in that from 100 to 300 ppm, based on the aqueous phase, of carbonate or bicarbonate are added to the polymerisation mixture.

3. A process according to either of claims 1 and 2, characterised in that the polymerisation is carried out in the presence of, as blowing agent, a gaseous or liquid organic compound which is known per se.

4. A process according to any of claims 1 to 3, characterised in that the polymerisation is carried out in the presence of under- and oversized particles.

5. A process according to any of claims 1 to 4, characterised in that first the interfering foreign ions in the organic and/or aqueous phase are removed using complexing agents, and the carbonate or bicarbonate is then added.

6. A process according to any of claims 1 to 5, characterised in that the polymerisation is carried out in the presence of flame-inhibiting compounds which are known per se.

7. A process according to any of claims 1 to 6, characterised in that the polymers obtained are coated after the polymerisation with coating compositions which are known per se.

8. The use of a polymer obtained according to any of claims 1 to 7 for the preparation of expandable or

8

nonexpandable styrene polymers.

**Revendications**

1. Procédé de préparation de produits de polymérisation du styrène présentant une étroite répartition granulométrique, par polymérisation de styrène, le cas échéant en mélange avec des comonomères, en dispersion aqueuse en présence d'initiateurs solubles dans le monomère, de colloïdes protecteurs organiques et de stabilisants minéraux de suspension,
caractérisé par le fait que l'on ajoute au mélange de polymérisation, relativement à la phase aqueuse, de 50 à 500 ppm d'un carbonate ou d'un bicarbonate difficilement soluble dans l'eau ou insoluble dans l'eau.

2. Procédé selon la revendication 1,
caractérisé par le fait que l'on ajoute au mélange de polymérisation, relativement à la phase aqueuse, de 100 à 300 ppm de carbonate ou de bicarbonate.

3. Procédé selon les revendications 1 et 2,
caractérisé par le fait que l'on travaille en présence de composés organiques gazeux ou liquides connus, en tant qu'agents gonflants.

4. Procédé selon les revendications 1 à 3,
caractérisé par le fait que l'on polymérise en présence de grains dehors des limites.

5. Procédé selon les revendications 1 à 4,
caractérisé par le fait que, dans la phase organique et/ou dans la phase aqueuse, on élimine d'abord les ions étrangers gênants à l'aide de formateurs de complexes et que l'on ajoute ensuite les carbonates ou bicarbonates.

6. Procédé selon les revendications 1 à 5,
caractérisé par le fait que l'on polymérise en présence de composés ignifugants connus en eux-mêmes.

7. Procédé selon les revendications 1 à 6,
caractérisé par le fait qu'après la polymérisation, on enduit les produits de polymérisation obtenus avec des agents d'enduction connus en eux-mêmes.

8. L'utilisation des produits de polymérisation obtenus selon les revendications 1 à 7 pour la préparation de produits de polymérisation du styrène expansibles ou non expansibles.